# FASCICULE DE BREVET EUROPEEN

(11) **EP 0 451 058 B1**
(45) Date de publication et mention de la délivrance du brevet: **22.06.1994**
(21) Numéro de dépôt: 91400921.2
(22) Date de dépôt: 05.04.1991
(51) Int. Cl.: E21B 29/00, E21B 31/16, E21B 31/20, B65G 5/00

(54) **Procédé et dispositif d'élimination d'un tubage disposé dans un puits d'accès à une cavité saline de stockage de gaz**
Verfahren und Vorrichtung zum Ablegen eines Steigrohres in einem Zugangsbohrloch einer Salzkaverne für Gasspeicherung
Method and apparatus for discarding a tubing in an access well to a salt cavity for gas storage

(30) Priorité: 05.04.1990 FR 9004386
(43) Date de publication de la demande: 09.10.1991
(73) Titulaire: SCHLUMBERGER LIMITED, New York, N.Y. 10172 (US); SCHLUMBERGER TECHNOLOGY B.V., NL-2517 KB Den Haag (NL); SCHLUMBERGER HOLDINGS LIMITED, Road Town, Tortola (VG)
(72) Inventeur: Goldschild, Pierre, F-77878 Vulaines sur Seine (FR)
(74) Mandataire: Hagel, Francis

(56) Documents cités:
- US-A- 2 481 637
- US-A- 3 019 840
- US-A- 3 045 752
- US-A- 3 277 654
- US-A- 4 047 568
- US-A- 4 550 781

## Description

L'invention concerne un procédé permettant d'éliminer un tubage disposé coaxialement à l'intérieur d'un cuvelage dans un puits d'accès à une cavité saline de stockage de gaz. L'invention concerne également un dispositif permettant de mettre en oeuvre ce procédé.

Afin d'assurer l'approvisionnement en gaz naturel des régions dépourvues de gisements suffisamment importants pour répondre à la demande, on procède de plus en plus fréquemment au stockage de gaz naturel en provenance d'autres régions dans des réservoirs souterrains. Ces réservoirs souterrains peuvent être constitués soit par des roches poreuses dans lesquelles le gaz, injecté sous pression, chasse l'eau qui occupait initialement la roche, soit par des cavités salines creusées dans un massif salifère par injection d'eau douce sous pression. Dans ce dernier cas, le gaz injecté sous pression chasse la saumure résultant de la dissolution du sel dans l'eau.

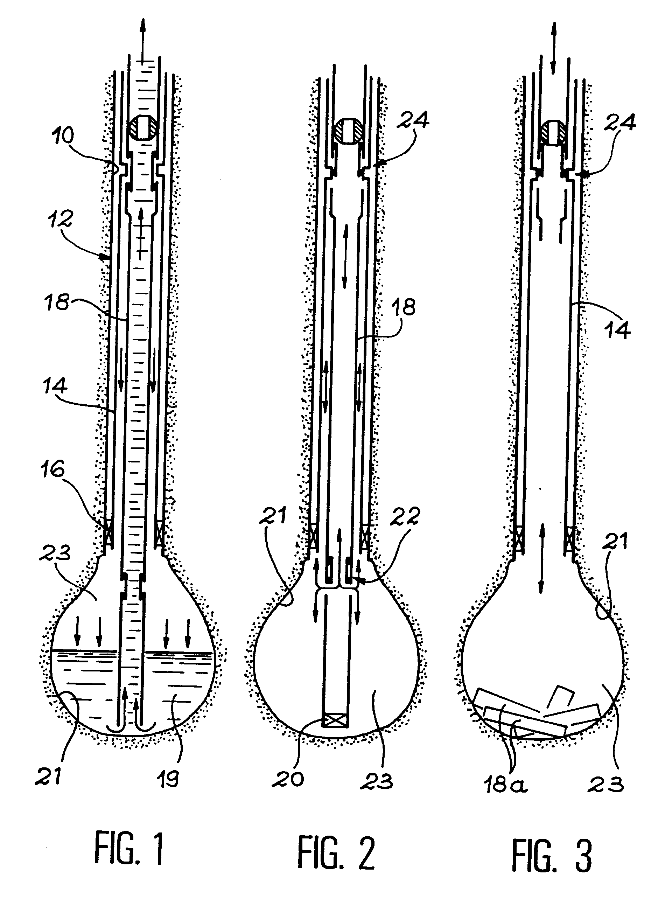

Afin de transformer un massif salifère en une cavité saline de stockage de gaz naturel, on creuse un ou plusieurs puits 10, comme l'illustre la figure 1, pour atteindre le massif salifère. Chaque puits 10 est équipé intérieurement d'un cuvelage de soutènement 12. Un cuvelage d'exploitation 14 est descendu coaxialement à l'intérieur du cuvelage de soutènement 12 et l'espace annulaire formé entre les deux cuvelages est obturé à son extrémité inférieure par un système d'étanchéité 16. Un tubage 18 est ensuite descendu dans le puits, coaxialement aux cuvelages 12 et 14, afin de permettre l'injection d'eau douce sous pression dans le massif salifère. Cette injection s'effectue par étape, afin d'agrandir progressivement le volume de sel dissous sous forme de saumure 19, qui définit le volume de la cavité de stockage 21 obtenue.

Comme l'illustre la figure 1, le gaz naturel que l'on désire stocker est ensuite injecté sous pression par le passage annulaire formé entre le cuvelage 14 et le tubage 18. Le gaz 23 ainsi injecté chasse la saumure 19 par le tubage 18. Le gaz se substitue ainsi progressivement à la saumure à l'intérieur de la cavité 21 et il peut y être comprimé jusqu'à une valeur d'environ 240 bars.

La cavité de stockage ainsi formée est ensuite exploitée, comme l'illustre la figure 2, par des soutirages et des injections de gaz qui sont effectués à la fois au travers de l'espace annulaire formé entre le cuvelage 14 et le tubage 18 et par l'intérieur de ce dernier. A cet effet, l'extrémité inférieure du tubage 18 qui se trouve à proximité du fond de la cavité est obturée par un système d'étanchéité 20. Au contraire, une vanne de circulation 22 formée dans le tubage 18 en dessous du système d'étanchéité 20 et des vannes de sécurité 24 situées à la partie supérieure du tubage 18 sont ouvertes.

Dans cette configuration, qui résulte comme on vient de le voir des différentes opérations qui doivent être effectuées avant que la cavité saline ne devienne un réservoir de stockage du gaz, la présence du tubage 18 induit de très importantes pertes de charge lors du soutirage du gaz, ce qui limite le débit de gaz soutiré en surface et pénalise l'exploitation des sites de stockage souterrain de ce type. Ainsi, on a calculé que l'élimination de toute la partie du tubage 18 située en dessous des vannes de sécurité 24 pouvait conduire, en période de pointe, à un gain en débit de soutirage maximum d'environ 68 %.

Un outil permettant de découper un tubage, un cuvelage ou une tige de forage par l'intérieur est commercialisé par la Société Bowen Tools Inc.. Cet outil est prévu pour être monté à l'extrémité inférieure d'un train de tiges que l'on descend dans le puits. Il se compose principalement d'un mandrin central supportant de bas en haut des patins ou des ressorts à lames appliqués élastiquement en permanence contre la surface intérieure du tube à découper, des pièces d'ancrage mobiles radialement et des couteaux également mobiles radialement. Les pièces d'ancrage sont aptes à coulisser radialement sur un fourreau portant les patins et qui coopère avec le mandrin par l'intermédiaire d'un filetage unidirectionnel interdisant toute montée du fourreau sur le mandrin tant que ce dernier n'est pas entraîné en rotation dans le sens du vissage, tout en permettant une translation vers le bas du fourreau sur le mandrin lorsqu'un effort relatif est exercé axialement dans ce sens entre les deux pièces. Une pièce pourvue de rampes à chacune de ses extrémités est en outre placée sur le mandrin entre les pièces d'ancrage et les couteaux, de telle sorte qu'une montée du fourreau sur le mandrin a successivement pour effets d'écarter les pièces d'ancrage vers la paroi intérieure du tube puis, lorsque ces pièces sont ancrées contre la paroi, d'écarter les couteaux.

L'actionnement de cet outil de coupe est obtenu en entraînant en rotation le mandrin dans le sens du vissage, ce qui a normalement pour conséquence de le faire descendre par rapport au fourreau qui reste immobilisé dans le tube grâce aux patins qu'il supporte. Cette descente du mandrin a pour effet, dans un premier temps, d'ancrer fermement l'outil dans le tube au moyen des pièces d'ancrage. Lorsque cet ancrage est réalisé, le fourreau n'est plus en prise avec le mandrin par l'intermédiaire du filetage unidirectionnel et la découpe du tube est réalisée en poursuivant la rotation du mandrin et en exerçant sur celui-ci un effort vers le bas, qui a pour conséquence d'écarter les couteaux.

Un outil de coupe de ce type n'est pas adapté à l'élimination d'un tubage placé dans un puits d'accès à une cavité saline. En effet, lorsque la découpe du tube a été effectuée, le poids du tronçon coupé agissant sur les pièces d'ancrage aurait pour effet immédiat de déplacer celles-ci vers le bas ainsi que le fourreau qui les supporte et, par conséquent, de larguer le tronçon. Cela n'est pas acceptable car le cuvelage risquerait d'être fortement endommagé et même perforé au cours de la chute (la longueur des tubages est généralement comprise entre 1400 m et 1700 m).

Par ailleurs, tout le fonctionnement de cet outil repose sur l'immobilisation en rotation et en translation du fourreau portant les pièces d'ancrage au moyen des patins. La fiabilité du système est donc insuffisante pour l'application envisagée.

L'invention a précisément pour objet un procédé et un dispositif permettant d'éliminer le tubage d'accès à un cavité saline afin d'augmenter très sensiblement le débit de soutirage du gaz contenu dans cette cavité saline, ce procédé et ce dispositif étant particulièrement fiables, éliminant tout risque d'endommager le cuvelage qui entoure le tubage, et prenant en compte les différents impératifs liés notamment aux caractéristiques dimensionnelles des puits, des cavités, du tubage et du cuvelage, aux conditions de pression régnant dans le puits et à la nécessité de laisser en place les vannes de sécurité qui se trouvent en haut du tubage.

Pour atteindre ces différents objectifs, il est proposé un procédé d'élimination d'un tubage disposé coaxialement à l'intérieur d'un cuvelage dans un puits d'accès à une cavité saline de stockage de gaz, caractérisé par le fait qu'il consiste à couper le tubage par tronçons, en partant du bas, en exécutant les opérations suivantes :
a) descente d'un outil de coupe dans le tubage ;
b) ancrage de cet outil dans le tubage en dessous d'un niveau de coupe choisi ;
c) coupe mécanique du tubage au moyen de l'outil de coupe, pour découper un tronçon inférieur dans le tubage ;
d) descente de l'outil portant ledit tronçon inférieur jusqu'en dessous de l'extrémité inférieur du cuvelage ;
e) largage du tronçon inférieur par l'outil de coupe ;
f) remontée de l'outil de coupe dans le tubage jusqu'à un niveau de coupe supérieur au précédent ;
g) répétition des opérations b) à f) jusqu'à la découpe complète du tubage.

Conformément à l'invention, la mise en oeuvre de ce procédé est assurée de préférence au moyen d'un dispositif d'élimination d'un tubage disposé coaxialement à l'intérieur d'un cuvelage dans un puits d'accès à une cavité saline de stockage de gaz, caractérisé par le fait qu'il comprend un outil de coupe apte à être descendu dans le tubage à l'extrémité d'un train de tiges tubulaires, cet outil de coupe comprenant :
- des moyens d'ancrage d'une partie inférieure, non rotative de l'outil dans le tubage, actionnés par des variations de pression à l'intérieur du train de tiges, à l'encontre d'une force exercée par des moyens de rappel ; et
- des moyens de coupe comprenant au moins un couteau monté sur une partie supérieure rotative de l'outil, un écartement du couteau étant assuré par un déplacement vers le bas de ladite partie supérieure, par rapport à la partie inférieure.

Dans ce dispositif, les moyens d'ancrage sont actionnés indépendamment des moyens de coupe, de telle sorte qu'ils peuvent être maintenus en prise de façon efficace et sûre lorsque la coupe d'un tronçon est terminée, ce qui autorise la descente de ce tronçon à l'aide de l'outil jusqu'en dessous de l'extrémité inférieure du cuvelage.

Dans un mode de réalisation préféré de l'invention, les moyens d'ancrage comprennent un piston mobile selon un axe de l'outil dans ladite partie inférieure, une face supérieure du piston étant soumise à la pression régnant à l'intérieur du train de tiges et une face inférieure du piston étant soumise à l'action desdits moyens de rappel, le piston étant solidaire d'au moins un coin coopérant avec au moins une pièce d'ancrage pour déplacer cette dernière radialement vers l'extérieur, à l'encontre de moyens élastiques, lorsque le piston se déplace vers le haut.

Les moyens de rappel comprennent alors avantageusement une chambre fermée formée dans ladite partie inférieure et remplie de gaz sous pression. Dans la pratique, ce gaz peut notamment être de l'azote, qui doit être comprimé avant la descente de l'outil dans le puits à une pression, par exemple d'environ 220 bars, supérieure d'au moins 50 bars à la pression maximum qui peut être atteinte à l'extrémité inférieure du tubage (par exemple, environ 170 bars).

Afin d'éviter qu'en cas de non fonctionnement des moyens d'ancrage dans le sens de la libération du tronçon découpé, l'outil de coupe ne reste bloqué dans le puits, une tige coulissante est de préférence montée dans le piston, de façon à pouvoir occuper une position haute, dans laquelle cette tige obture un passage formé dans le piston et apte à mettre en communication les faces inférieure et supérieure de ce dernier, et une position basse dans laquelle ledit passage est ouvert, la tige coulissante étant normalement maintenue en position haute par un organe frangible.

Une redondance supplémentaire peut en outre être obtenue en suspendant l'outil de coupe au train de tiges tubulaires par des moyens de déconnexion manoeuvrables à distance.

Ces moyens de déconnexion peuvent notamment comprendre, dans le mode de réalisation préféré de l'invention, un corps tubulaire mâle fixé à l'extrémité inférieure du train de tiges tubulaires, et comportant des branches souples munies extérieurement d'empreintes complémentaires d'empreintes formées dans un corps tubulaire femelle fixé à la partie supérieure rotative de l'outil de coupe, un fourreau de retenue normalement immobilisé en position haute dans le corps tubulaire mâle par des moyens de blocage maintenant alors les empreintes formées sur les branches souples en prise avec les empreintes formées dans le corps tubulaire femelle, un déverrouillage des moyens de blocage commandé par l'application d'un effort vers le bas sur le fourreau de retenue amenant ce dernier dans une position basse dans laquelle les branches souples peuvent se déformer radialement vers l'intérieur pour dégager les empreintes formées sur ces branches des empreintes formées sur le corps tubulaire femelle.

Les moyens d'ancrage peuvent avoir à être actionnés, puis relâchés pendant des périodes relativement longues, après la découpe d'un tronçon de tubage situé à proximité du sol (par exemple à 100 m de profondeur), puisque ce tronçon doit alors être redescendu par l'outil jusqu'au fond du puits (par exemple à 1700 m de profondeur). Le maintien dans le train de tiges d'une pression suffisante pour assurer le relâchement des moyens d'ancrage pendant toute la remontée de l'outil pose alors des problèmes difficiles à résoudre, étant donné que les tiges élémentaires du train de tiges doivent être démontées au cours de cette remontée.

Afin d'éviter cette difficulté, le piston supporte avantageusement un barillet rotatif pourvu d'une rainure dans laquelle pénètre au moins un pion porté par la partie inférieure, non rotative de l'outil, cette rainure étant telle qu'à chaque fois qu'une impulsion de pression est envoyée à l'intérieur du train de tiges, les moyens d'ancrage passent de leur position escamotée à leur position d'ancrage, et inversement, et restent dans cette position tant qu'une nouvelle impulsion de pression n'est pas envoyée dans le train de tiges.

Par ailleurs, afin d'éviter que les moyens de coupe ne viennent accidentellement en prise contre la paroi du tubage lors de la descente de l'outil, la partie supérieure rotative de ce dernier est normalement en prise avec la partie inférieure non rotative par un filetage unidirectionnel autorisant un déplacement vers le bas de ladite partie supérieure, sous l'effet d'une rotation de cette dernière, jusqu'à une position inférieure de découpe dans laquelle ledit filetage n'est plus en prise, et un déplacement vers le haut de ladite partie supérieure, par une simple translation de cette dernière.

Dans ce cas, le couteau est en appui sur une rampe formée sur une pièce montée coulissante selon l'axe de l'outil et dont l'extrémité opposée prend appui sur la pièce inférieure non rotative, par l'intermédiaire d'un moyen élastique précontraint. Cette caractéristique permet d'appliquer en permanence sur le couteau, lors de la découpe du tubage, un effort constant totalement indépendant de l'effort appliqué sur le train de tiges supportant l'outil.

Un mode de réalisation préféré de l'invention va à présent être décrit, à titre d'exemple non limitatif, en se référant aux dessins annexés, dans lesquels :
- la figure 1, déjà décrite, est une vue en coupe illustrant de façon très schématique le remplissage en gaz d'une cavité saline remplie de saumure ;
- la figure 2, déjà décrite, est une vue en coupe comparable à la figure 1 illustrant un puits permettant, dans l'état actuel de la technique, d'exploiter une cavité saline de stockage de gaz naturel ;
- la figure 3 est une vue en coupe comparable à la figure 2 illustrant de façon très schématique un puits permettant d'exploiter une cavité saline après que le tubage de ce puits ait été éliminé conformément au procédé de l'invention ;
- les figures 4A à 4E sont des vues en coupe partielle schématique illustrant successivement la descente de l'outil de coupe selon l'invention dans le tubage, l'ancrage de cet outil, la découpe d'un tronçon inférieur de ce tubage, la descente de ce tronçon jusqu'à l'extrémité inférieure du cuvelage, puis le largage de ce tronçon dans la cavité ;
- les figures 5A et 5B sont des vues en coupe représentant à plus grande échelle les moyens d'ancrage situés dans la partie inférieure de l'outil de coupe, respectivement dans leur position escamotée et dans leur position d'ancrage ;
- les figures 6A et 6B sont des vues en coupe illustrant à la même échelle que les figures 5A et 5B la partie supérieure de l'outil de coupe dans laquelle sont logés les moyens de coupe, ces derniers étant illustrés respectivement en position escamotée et en position de coupe ;
- les figures 7A et 7B sont des vues en coupe illustrant à plus grande échelle les moyens de déconnexion par lesquels l'outil de coupe est normalement suspendu à l'extrémité inférieure du train de tiges, ces moyens de déconnexion étant illustrés respectivement dans leur position normale de liaison et dans leur position de déconnexion ; et
- la figure 8 est une vue développée représentant un barillet rotatif monté dans le piston commandant les moyens d'ancrage, illustrant différentes positions relatives entre ce barillet et des pions portés par la partie inférieure non rotative de l'outil.

Conformément à l'invention, afin d'éliminer le tubage 18 sur toute sa longueur, à l'exception de la partie supérieure d'environ 100 m dans laquelle sont situées les vannes de sécurité 24 (figure 2) on utilise un outil de coupe équipé de moyens d'ancrage à commande séparée, que l'on descend dans le tubage 18 afin de découper ce dernier, en partant du bas, en tronçons qui restent fixés à l'outil par les moyens d'ancrage après la découpe, de telle sorte que chaque tronçon découpé soit descendu en dessous de l'extrémité inférieure du cuvelage 14, avant d'être largué dans la cavité saline. En répétant ces opérations autant de fois que nécessaire, le puits servant à exploiter la cavité saline se trouve dans les conditions illustrées sur la figure 3, c'est-à-dire que la majeure partie du tubage 18, découpé en tronçons 18a, repose dans le fond de la cavité saline 21, à l'exception de la partie supérieure du tubage dans laquelle se trouvent les vannes de sécurité 24. Dans ces conditions, l'exploitation de la cavité saline se caractérise par un gain sur le débit de soutirage du gaz stocké pouvant atteindre jusqu'à environ 68 % par rapport à la configuration actuelle illustrée sur la figure 2.

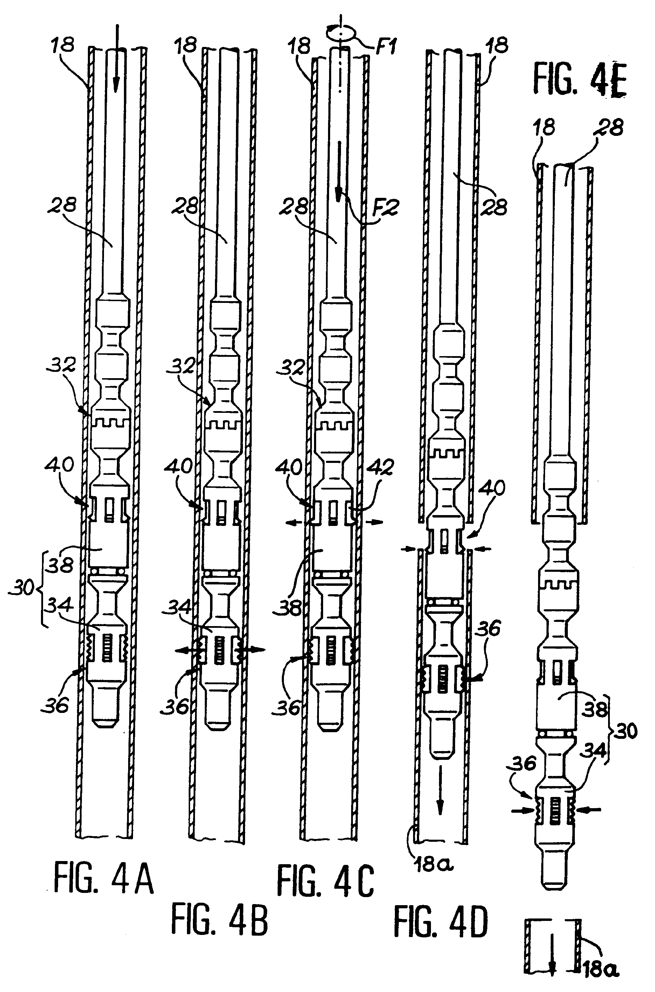

Pour effectuer ces différentes opérations, le dispositif d'élimination du tubage conforme à l'invention comprend une installation de surface (non représentée) au moyen de laquelle un train de tiges tubulaires 28 (figures 4A à 4E) portant à son extrémité inférieure un outil de coupe 30 est introduit dans le tubage 18.

L'installation de surface permet de réaliser la montée et la descente du train de tiges 28, ainsi que son entraînement en rotation. Le train de tiges 28 est formé à cet effet de tiges tubulaires élémentaires, appelées "macaronis", qui sont vissées bout à bout au fur et à mesure de la descente de l'outil et qui sont dévissées lors de sa remontée. Cette installation de surface, appelée installation de "repoussage" (en anglais, "snubbing") est une installation connue qui permet à tout moment de garantir l'étanchéité entre le train de tiges et l'intérieur du tubage dans lequel ce dernier pénètre. Cette installation comprend des vérins hydrauliques qui, par l'intermédiaire de coins d'ancrage, permettent de forcer le train de tiges à pénétrer dans le puits sous pression au début de la descente, et de le retenir à l'encontre de son poids à la fin de la descente. Elle permet en outre d'entraîner le train de tiges en rotation, de le remplir d'eau et d'appliquer à volonté des impulsions de pression sur la colonne d'eau ainsi formée.

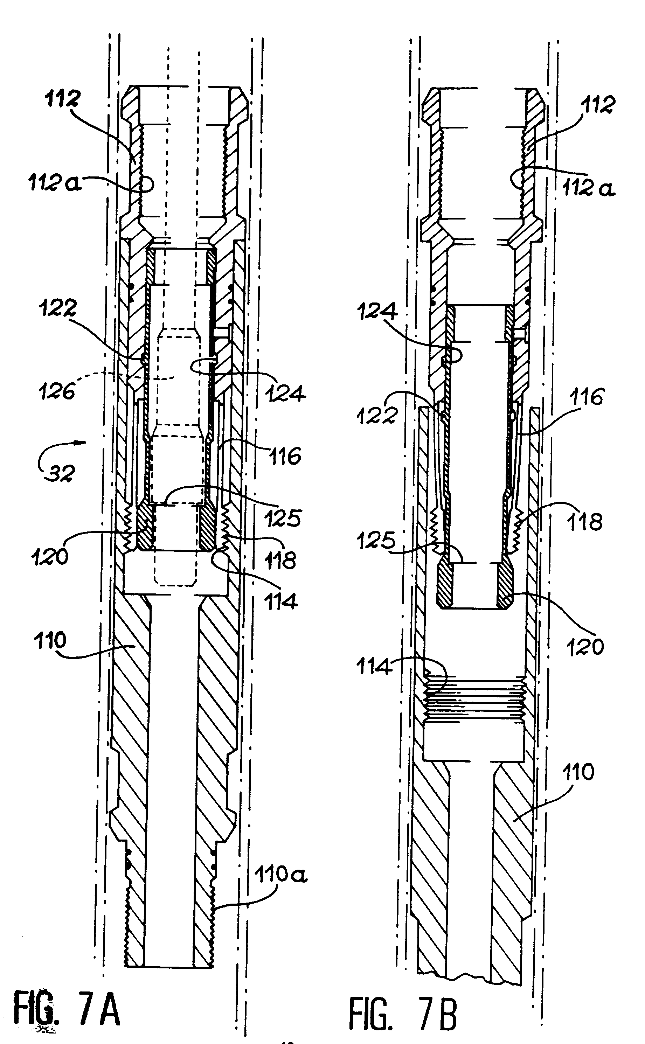

En se référant à la figure 4A, on voit que l'outil de coupe 30 est monté à l'extrémité inférieure du train de tiges 28 par l'intermédiaire de moyens de déconnexion 32 qui seront décrits en détail par la suite en se référant aux figures 7A et 7B. L'outil de coupe 30 comprend une partie inférieure non rotative 34 dans laquelle sont logés des moyens d'ancrage 36 et une partie supérieure rotative 38 dans laquelle sont logés des moyens de coupe 40. La partie inférieure 34 est prévue pour être ancrée à l'intérieur du tubage 18 à l'aide des moyens d'ancrage 36, de façon à être immobilisés en rotation et en translation dans le tubage. Au contraire, la partie supérieure 38 est fixée au train de tiges 28 par l'intermédiaire des moyens de déconnexion 32, de façon à pouvoir tourner librement par rapport à la partie inférieure 34.

Avant de procéder à la description détaillée de l'outil de coupe 30, on décrira brièvement les différentes opérations qui sont mises en oeuvre pour éliminer le tubage 18, en se référant successivement aux figures 4A à 4E.

Une première opération (non représentée sur les figures), consiste à couper à l'aide d'un outillage quelconque (par exemple à explosif) la partie inférieure du tubage 18 comportant la vanne de circulation 22 et située en dessous de l'extrémité inférieure du cuvelage 14. On installe alors des manchons de protection (non représentés) à l'intérieur des vannes de sécurité 24.

On descend ensuite progressivement, à l'aide de l'installation de surface, l'outil de coupe 30 après l'avoir fixé à l'extrémité inférieure du train de tiges tubulaires 28 jusqu'à un niveau correspondant à la première découpe à effectuer, à la partie inférieure du tubage 18 (figure 4A). Pendant la descente, les moyens d'ancrage 36 ainsi que les moyens de coupe 40 occupent leur position escamotée de repos. De plus, au fur et à mesure de la descente, le train de tiges 28 est rempli d'eau.

Lorsque la cote désirée est atteinte par l'outil, les moyens d'ancrage 36 sont actionnés par l'envoi d'un signal de pression au travers de la colonne de liquide remplissant le train de tiges 28, d'une manière qui sera décrite en détail par la suite. La partie inférieure 34 de l'outil se trouve alors solidarisée en rotation et en translation du tubage 18 (figure 4B). Dans ces conditions, un effort de traction par exemple de 2 tonnes est exercé sur le train de tiges 28, afin de contrôler la bonne tenue des moyens d'ancrage. La valeur de cet effort de traction est choisie afin de correspondre au poids qu'auront à retenir les moyens d'ancrage après la coupe, ce qui évite tout risque de largage prématuré du tronçon coupé à ce moment.

L'opération de coupe peut ensuite être débutée (figure 4C), en mettant en rotation depuis la surface la partie supérieure 38 de l'outil, au travers du train de tiges 28 et des moyens de déconnexion 32 (flèche F1). A cette mise en rotation de la partie supérieure 38 de l'outil s'ajoute dans un deuxième temps l'application d'un effort orienté vers le bas (flèche F2) correspondant à environ 1 tonne de poids sur les moyens d'ancrage 36. Les couteaux 42 des moyens de coupe 40 s'écartent alors et attaquent le tubage sous l'effet de la rotation de la partie supérieure 38 de l'outil.

Lorsque la coupe est terminée, comme l'illustre la figure 4D, le couple de rotation exercé sur le train de tiges chute et le poids de l'ensemble du dispositif est augmenté du poids du tronçon 18a découpé dans le tubage 18. Ces changements sont observés en surface et permettent aux opérateurs d'entamer la descente de l'ensemble formé par le train de tiges 28, l'outil 30 et le tronçon coupé 18a, jusqu'à l'extrémité inférieure du cuvelage entourant le tubage 18.

Lorsque ce niveau est atteint et comme l'illustre la figure 4E, un nouveau signal de pression est envoyé dans la colonne d'eau contenue dans le train de tiges 28, ce qui a pour effet de commander le retour en position escamotée des moyens d'ancrage 36 et, par conséquent, le largage du tronçon coupé 18a.

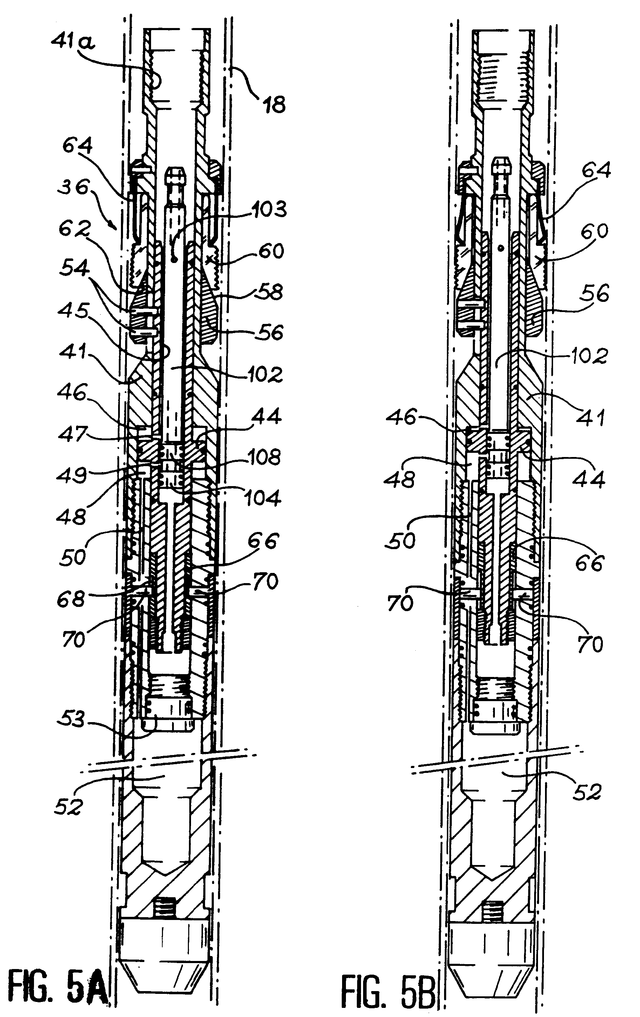

Un module inférieur d'ancrage de l'outil de coupe 30, comportant les moyens d'ancrage 36, va à présent être décrit en détail en se référant aux figures 5A et 5B.

Ce module inférieur d'ancrage comprend un corps tubulaire 41 fermé à son extrémité inférieure et constituant la portion basse de la partie inférieure non rotative 34. Dans sa partie centrale, le corps tubulaire 41 constitue le cylindre d'un vérin d'actionnement des moyens d'ancrage 36. Ce vérin comprend de plus un piston 44 qui coulisse de façon étanche à l'intérieur du corps tubulaire 41 et délimite dans ce dernier une chambre supérieure 46 et une chambre inférieure 48.

Le piston 44 est traversé par un alésage axial 45 dans lequel débouche au moins un passage 47 formé dans le piston et reliant l'alésage 45 à la chambre supérieure 46.

Un passage 50 formé dans le corps tubulaire 41 assure en permanence une communication entre la chambre inférieure 48 et une chambre fermée 52 formée dans la partie inférieure du corps tubulaire 41. Cette chambre 52 est séparée de l'alésage dans lequel est reçu le piston 44 par un bouchon étanche vissé 53.

La chambre 52 est remplie d'un gaz sous pression tel que de l'azote par un orifice de remplissage (non représenté), avant que l'outil de coupe ne soit descendu dans le puits. La pression du gaz contenu dans la chambre 52 est déterminée de façon à être toujours supérieure d'au moins 50 bars à la pression hydrostatique de la colonne d'eau contenue dans le train de tiges auquel est suspendu l'outil de coupe. Ainsi, dans le cas d'un tubage long d'environ 1700 m correspondant à une pression maximum de la colonne d'eau dans la partie basse du tubage d'environ 170 bars, la pression de gaz dans la chambre 52 est égale à environ 220 bars. Par conséquent, le piston 44 est en permanence poussé vers le haut avec une force au moins égale à environ 1 tonne.

Dans sa partie supérieure, le piston 44 est solidaire, par l'intermédiaire de pions 54 traversant une partie de diamètre extérieur réduit du corps tubulaire 41 au-dessus de la chambre 46, d'une pièce annulaire 56 apte à coulisser axialement sur cette partie de diamètre extérieur réduit. La pièce annulaire 56 comporte une rampe tronconique 58 à son extrémité supérieure. La rampe tronconique 58 forme par exemple avec l'axe de l'outil un angle d'environ 15°.

Des pièces d'ancrage 60, par exemple au nombre de trois, sont régulièrement réparties autour de la partie de diamètre extérieur réduit du corps tubulaire 41 au-dessus de la pièce 56. Chacune de ces pièces d'ancrage 60 est en appui sur la rampe tronconique 58 par une rampe complémentaire 62 et peut se déplacer radialement sur le corps tubulaire 41 entre une position escamotée illustrée sur la figure 5A et une position d'ancrage illustrée sur la figure 5B, à l'encontre de ressorts à lames 64 fixés sur le corps tubulaire 41. La surface extérieure des pièces d'ancrage 60 est cylindrique et irrégulière, de façon à éviter tout risque de glissement relatif entre ces pièces d'ancrage et le tubage 18 lorsque les pièces sont en appui contre la surface intérieure du tubage.

Dans sa partie située en dessous de la chambre inférieure 48 du vérin, le piston 44 supporte un barillet rotatif 66 qui présente sur sa surface extérieure une rainure 68 dans laquelle pénètrent deux pions 70 diamétralement opposés fixés radialement dans la pièce tubulaire 41.

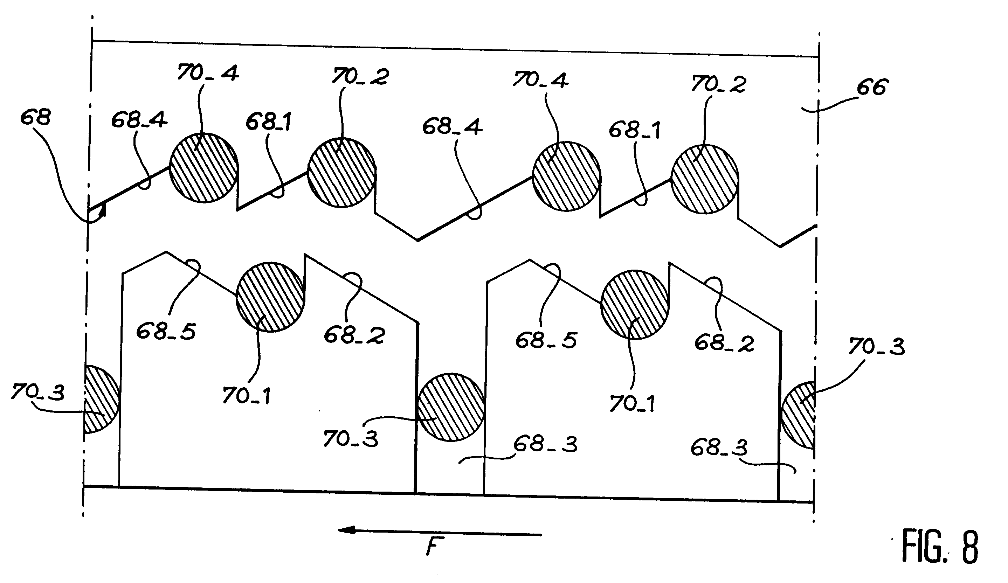

Comme l'illustre la figure 8, la rainure 68 formée sur la surface extérieure du barillet rotatif 66 présente en développé une forme telle qu'à chaque déplacement axial relatif entre le piston 44 et le corps tubulaire formant la partie inférieure 34, le barillet 66 effectue une rotation dans un sens déterminé schématisé par la flèche F sur la figure 8, par suite de la coopération des pions 70 avec cette rainure 68.

De façon plus précise, la rainure 68 est réalisée de telle sorte qu'on puisse faire passer les moyens d'ancrage de leur position escamotée illustrée sur la figure 5A dans leur position d'ancrage illustrée sur la figure 5B et inversement, à chaque fois qu'une impulsion de pression est envoyée dans le train de tiges 28, chacune de ces positions étant maintenue par la coopération des pions 70 avec la rainure 68 lorsque cesse cette impulsion.

La position escamotée illustrée sur la figure 5A correspond à l'appui des pions 70 sur une partie de la rainure 68 fermée vers le bas, de la manière illustrée en 70-1 sur la figure 8.

Lorsqu'une impulsion de pression est envoyée dans le train de tiges 28 depuis la surface, cette impulsion parvient dans la chambre supérieure 46 au travers du passage 47 traversant le piston 44. La pression dans la chambre supérieure 46 devient alors supérieure à la pression dans la chambre inférieure 48, de sorte que le piston 44 se déplace vers le bas, à l'intérieur du corps tubulaire 41. Au cours de ce déplacement, les pions 70 viennent en appui sur des bords supérieurs inclinés 68-1 de la rainure 68, ce qui a pour effet d'entraîner en rotation le barillet 66 dans le sens de la flèche F, jusqu'à ce que les pions parviennent aux positions 70-2 illustrées sur la figure 8, correspondant à des parties de la rainure 68 fermées vers le haut.

Dès que l'impulsion de pression envoyée dans le train de tiges cesse, la pression dans la chambre inférieure 48 redevient supérieure à la pression dans la chambre supérieure 46, de sorte que le piston 44 remonte à l'intérieur du corps tubulaire 41. Le piston 44 entraîne avec lui le barillet rotatif 66, de sorte que les pions 70 viennent en appui contre des bords inférieurs inclinés 68-2 de la rainure 68. Cela a pour effet de faire tourner à nouveau le barillet 66 dans le sens de la flèche F, jusqu'à ce que les pions 70 se trouvent en face de parties 68-3, orientées parallèlement à l'axe de l'outil et ouvertes vers le bas de la rainure 68. En pénétrant dans ces parties 68-3 de la rainure 68, les pions 70 permettent au piston 44 de remonter sur une distance suffisante pour que les pièces d'ancrage 60 viennent en appui contre la surface intérieure du tube 18. Les pions occupent alors les positions illustrées en 70-3 sur la figure 8.

Si une nouvelle impulsion de pression est envoyée dans le train de tiges 28, la pression dans la chambre supérieure 46 redevient momentanément supérieure à la pression régnant dans la chambre inférieure 48. Par conséquent, le piston 44 redescend à l'intérieur du corps tubulaire 41. Il entraîne avec lui le barillet rotatif 66, de telle sorte que les pions 70 viennent en appui contre des bords supérieurs inclinés 68-4 de la rainure 68. L'inclinaison de ces bords 68-4 a encore pour effet de faire tourner le barillet 66 dans le sens de la flèche F, jusqu'à ce que les pions 70 se trouvent dans les positions illustrées en 70-4 sur la figure 8, correspondant à des parties de la rainure 68 fermées vers le haut.

Dès que cesse l'impulsion de pression, la pression dans la chambre supérieure 46 redevient inférieure à la pression dans la chambre inférieure 48, de sorte que le piston 44 remonte à l'intérieur du corps tubulaire 41. Le piston 44 entraîne dans son mouvement le barillet 66, de telle sorte que les pions 70 viennent en appui contre des bords inférieurs inclinés 68-5 de la rainure 68. L'inclinaison de ces bords 68-5 a encore une fois pour effet de faire tourner le barillet 66 dans le sens de la flèche F, jusqu'à ce que les pions 70 reviennent dans leur position initiale illustrée en 70-1 sur la figure 8. Dans ces conditions, les pièces d'ancrage 60 restent dans leur position escamotée bien que la pression dans la chambre supérieure 46 soit inférieure à la pression dans la chambre inférieure 48.

Par conséquent, la coopération du barillet rotatif 66 avec les pions 70 permet, en envoyant des impulsions de pression dans la colonne d'eau qui remplit le train de tiges 28, de faire passer alternativement les pièces d'ancrage 60 de leur position escamotée dans leur position d'ancrage, et inversement.

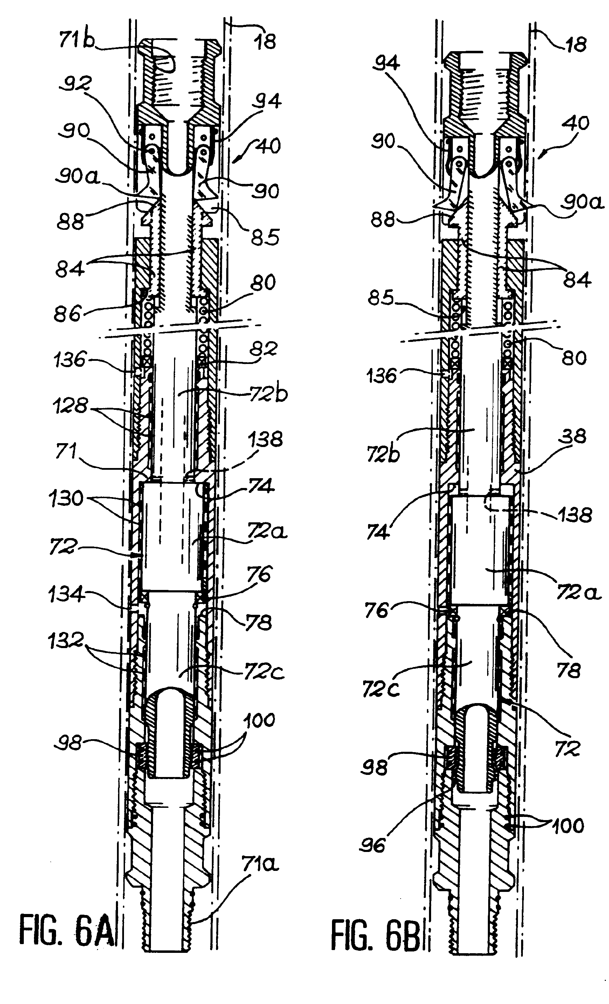

On décrira à présent en se référant aux figures 6A et 6B le module supérieur de coupe de l'outil, dans lequel sont logés les moyens de coupe 40.

Le module supérieur de coupe comprend un corps tubulaire extérieur 71 pourvu à son extrémité inférieure d'un filetage 71a normalement vissé dans un taraudage 41a formé à l'extrémité supérieure du corps tubulaire 41 (figure 5A). Les corps tubulaires 41 et 71 forment, lorsqu'ils sont assemblés, la partie inférieure non rotative 34 de l'outil de coupe.

Un corps tubulaire intérieur 72, formant la partie supérieure rotative 38 de l'outil, est monté dans le corps tubulaire extérieur 71 de façon à pouvoir tourner librement à l'intérieur de ce dernier et à pouvoir se déplacer selon l'axe de l'outil avec une course réduite. Cette course est limitée vers le haut par la venue en appui d'une partie centrale 72a de relativement grand diamètre du corps tubulaire intérieur 72 contre un épaulement supérieur 74 formé dans le corps tubulaire extérieur 71. La partie centrale 72a peut également venir en appui, par l'intermédiaire d'une butée à billes 76 montée sur sa face inférieure, contre un épaulement inférieur 78 formé dans le corps tubulaire extérieur 71 et limitant le déplacement vers le bas du corps tubulaire intérieur 72.

Un ressort de compression précontraint 80 est monté dans un espace annulaire formé entre la partie supérieure du corps tubulaire extérieur 71 et une partie supérieure 72b de relativement petit diamètre du corps tubulaire intérieur 72. Ce ressort de compression 80 prend appui par son extrémité inférieure sur un épaulement du corps tubulaire extérieur 71, par l'intermédiaire d'une butée à billes 82. L'extrémité supérieure du ressort 80 est en appui direct contre la face inférieure de trois pièces 84 montées coulissantes dans des rainures axiales 85 formées dans la partie supérieure 72b du corps tubulaire intérieur 72 et régulièrement réparties. Sous l'action du ressort 80, un talon formé à l'extrémité inférieure de chaque pièce 84 est normalement en appui contre un épaulement 86, tourné vers le bas, formé à l'intérieur du corps tubulaire extérieur 71. L'extrémité supérieure de chacune des pièces 84 fait saillie au-delà du bord d'extrémité supérieur du corps tubulaire 71.

La face supérieure de chaque pièce 84 présente une rampe inclinée 88 sur laquelle est normalement en appui le talon d'un couteau 90 logé dans la même rainure axiale 85 que cette pièce 84 et monté pivotant sur la partie supérieure du corps intérieur tubulaire 72, au-dessus de la pièce 84. Les couteaux 90, qui sont avantageusement des couteaux Bowen Tools, Inc., sont montés pivotant sur le corps 72 par leur extrémité supérieure, au moyen d'un axe 92 orthogonal à l'axe de l'outil. Le talon formé à l'extrémité inférieure de chacun des couteaux 90 est maintenu en permanence en appui contre la rampe 88 correspondante par un ressort à lame 94 fixé sur le corps tubulaire intérieur 72. L'extrémité inférieure de chaque couteau 90 comporte également une arête tranchante 90a tournée vers l'extérieur.

L'agencement qui vient d'être décrit permet aux couteaux 90 d'occuper normalement une position rétractée, illustrée sur la figure 6A, sous l'action des ressorts à lame 94, lorsque le corps tubulaire intérieur 72 occupe sa position haute à l'intérieur du corps tubulaire extérieur 71. Au contraire, comme l'illustre la figure 6B, lorsque le corps tubulaire intérieur 72 occupe sa position basse à l'intérieur du corps tubulaire extérieur 71, la coopération entre les talons des couteaux 90 et les rampes 88 a pour effet d'écarter les couteaux 90 à l'encontre des ressorts à lame 94, dans une position de coupe dans laquelle les arêtes tranchantes des couteaux 90 sont appliquées contre la surface intérieure du tubage 18 avec un effort de coupe déterminé par la précontrainte emmagasinée dans le ressort 80. Cette précontrainte peut notamment être d'environ 600 daN et reste indépendante de l'effort appliqué par ailleurs sur le corps tubulaire intérieur 72.

En dessous de la partie centrale 72a, le corps tubulaire intérieur 72 comporte une partie inférieure 72c de relativement petit diamètre, terminée par un filetage 96 dont les filets comportent une face supérieure inclinée et une face inférieure droite. Lorsque le corps tubulaire intérieur 72 est dans la position haute illustrée sur la figure 6A, ce filetage 96 est vissé dans un écrou segmenté 98 constitué, par exemple, de quatre segments sollicités élastiquement vers l'intérieur par des anneaux élastiques 100. Cet écrou segmenté 98 est immobilisé en translation à l'intérieur du corps tubulaire extérieur 71 et comporte des filets complémentaires des filets formant le filetage 96.

Le système ainsi formé constitue un filetage unidirectionnel qui empêche tout déplacement vers le bas du corps tubulaire intérieur 72 à l'intérieur du corps tubulaire extérieur 71 lorsqu'aucune rotation du corps tubulaire intérieur dans le sens du vissage n'intervient. Au contraire, ce filetage unidirectionnel permet au corps tubulaire intérieur 72 de revenir dans sa position haute sous l'effet d'un simple effort axial orienté vers le haut, sans qu'il soit nécessaire de faire tourner ce corps tubulaire intérieur en sens inverse.

Lorsque l'outil de coupe est descendu dans le puits, les couteaux 90 occupent la position escamotée illustrée sur la figure 6A et le filetage 96 formé à l'extrémité inférieure du corps tubulaire intérieur 72 est vissé dans l'écrou segmenté 98. Tout écartement intempestif des couteaux 90 est alors empêché.

Lorsque les corps tubulaires 41 et 71, formant la partie inférieure 34 de l'outil sont immobilisés à l'intérieur du tubage 18 après l'actionnement des moyens d'ancrage 36, la découpe du tubage est effectuée en entraînant en rotation le corps tubulaire intérieur 72 au moyen de l'installation de surface reliée à ce corps par le train de tiges 28. Cette rotation a pour effet de visser le filetage 96 dans l'écrou segmenté 98 et, par conséquent, de faire descendre le corps tubulaire intérieur 72 dans le corps tubulaire extérieur 71. Au cours de cette descente, les couteaux 90, poussés par les rampes 88, s'écartent et viennent en contact avec le tubage 18 à couper. Le mouvement de rotation transmis au corps tubulaire intérieur 72 s'accompagne de l'application progressive d'un effort correspondant à un poids d'environ 1 à 1,5 tonne. Cet effort, qui assure la poursuite de la descente du corps tubulaire intérieur 72 nécessaire à la découpe lorsque le filetage 96 n'est plus en prise avec l'écrou segmenté 98, n'est pas transmis aux couteaux 90. Comme on l'a déjà mentionné, l'effort exercé sur ces couteaux est essentiellement déterminé par la force emmagasinée dans le ressort 80, qui assure l'application d'un effort de coupe sensiblement constant sur les couteaux.

Lorsque la descente en hélice des couteaux 90 obtenue de la manière qui vient d'être décrite amène la partie centrale 72a du corps tubulaire intérieur 72 en appui contre l'épaulement 78 par l'intermédiaire de la butée à bille 76, la coupe est terminée.

Il est à noter que dans certains cas, il est possible d'injecter de l'eau dans l'espace annulaire formé entre le tubage 18 et le train de tiges 28, pour assurer la lubrification des couteaux 90 lors de la coupe et faciliter cette dernière.

Lorsque la coupe est terminée, l'effort axial et l'effort de rotation appliqués sur le corps tubulaire intérieur 72 par l'intermédiaire du train de tiges sont interrompus. En exerçant alors sur le train de tiges un effort orienté vers le haut qui s'ajoute à l'action des ressorts à lames 94, on permet aux couteaux 90 de reprendre leur position escamotée illustrée sur la figure 6A, grâce au filetage unidirectionnel constitué par le filetage 96 et l'écrou segmenté 98.

Etant donné que la pression du gaz dans le tubage ainsi que la pression hydrostatique de l'eau dans le train de tiges sont variables, l'outil de coupe est en outre conçu de façon à être indépendant des fluctuations de pression inhérentes aux conditions opératoires. A cet effet, on s'arrange pour que toutes les sections sur lesquelles s'appliquent la pression du gaz contenu dans le tubage ainsi que la pression de la colonne d'eau contenue dans le train de tiges soient égales et en équilibre.

A cet effet, trois séries de joints tournants désignés respectivement par les références 128, 130 et 132 sont placés entre le corps tubulaire intérieur 72 et le corps tubulaire extérieur 71 (figures 6A et 6B). Les joints tournants 130 sont placés entre le corps tubulaire extérieur 71 et la partie centrale 72a de relativement grand diamètre du corps tubulaire intérieur 72 et les joints tournants 128 et 132 sont placés respectivement entre les parties supérieure 72b et inférieure 72c du corps tubulaire intérieur 72 et le corps tubulaire extérieur 71, à proximité de la partie centrale 72a. De plus, les sections des parties 72b et 72c sur lesquelles sont placés les joints tournants 128 et 132 sont égales entre elles, ainsi qu'à la différence de section entre la partie centrale 72a et ces parties 72b et 72c.

Par ailleurs, le corps tubulaire extérieur comporte au moins une perforation 134 débouchant entre les joints tournants 130 et 132 et au moins une perforation 136 débouchant au-dessus des joints tournants 128, dans la chambre annulaire contenant le ressort 80. De même, le corps tubulaire intérieur 72 comporte au moins une perforation 138 débouchant entre les joints tournants 128 et 130.

Par conséquent, le gaz contenu dans le tubage 18 agit sur des surfaces opposées et égales du corps tubulaire intérieur 72 formées par la partie supérieure 72b située au-dessus des joints toriques 128 et par la surface inférieure annulaire de la partie centrale 72a. De façon comparable, la pression de la colonne d'eau à l'intérieur du train de tiges 28 agit simultanément sur les surfaces opposées et égales formées par la surface annulaire supérieure de la partie centrale 72a et par la partie de ce corps tubulaire située en dessous des joints toriques 132.

Ces différentes caractéristiques permettent de faciliter la rotation et la translation du corps tubulaire intérieur 72 à l'intérieur du corps tubulaire extérieur 71, indépendamment des fluctuations des pressions.

En outre, on s'arrange lors de la coupe d'un tronçon du tubage 18 pour que la pression de l'eau dans le train de tiges soit maintenue aussi proche que possible de celle du gaz dans le tubage, tout en restant inférieure à la pression d'azote régnant dans la chambre fermée 52.

L'outil de coupe illustré sur les figures comprend de plus un moyen permettant de commander le relâchement des moyens d'ancrage 36, dans le cas où le système décrit précédemment en se référant aux figures 5A et 5B ne fonctionnerait pas.

Ce moyen de relâchement de secours, illustré sur les figures 5A et 5B, comprend une tige tubulaire coulissante 102 reçue dans le piston 44 selon l'axe de l'outil et dont la partie supérieure fait saillie au-delà du bord supérieur du piston 44. Cette tige tubulaire 102 est normalement immobilisée à l'intérieur du piston 44 par une goupille frangible 103, dans une position dans laquelle une partie inférieure 108 de cette tige obture de façon étanche l'alésage 45 formé dans le piston 44, entre le passage 47 débouchant dans la chambre supérieure 46 et un passage 49 débouchant dans la chambre inférieure 48. Dans cette même position, une autre partie 104 de la tige tubulaire 102 obture de façon étanche l'alésage 45 en dessous du passage 49.

Lorsqu'on se trouve dans la position d'ancrage illustrée sur la figure 5B et qu'il n'est pas possible de repasser à la position escamotée illustrée sur la Figure 5A par l'envoi d'une impulsion de pression dans le train de tiges, ce qui peut notamment se produire si une fuite apparaît dans le train de tiges, on peut obtenir le relâchement des moyens d'ancrage 36 en descendant à l'intérieur du train de tiges un outil tel qu'une barre de charge suspendue à un câble. Cet outil vient heurter l'extrémité supérieure de la tige tubulaire 102, ce qui a pour effet de casser la goupille frangible 103 et de faire descendre la tige à l'intérieur du piston 44. La partie 108 de la tige 102 descend alors en dessous du passage 49, ce qui a pour effet de faire communiquer les chambres 46 et 48 et d'égaliser les pressions agissant sur le piston 44. En continuant le battage de la tige 102 à l'aide de la barre de charge, la tige force le piston 44 à descendre en entraînant ainsi la pièce 56, ce qui a pour effet de ramener les blocs d'ancrage 60 dans leur position escamotée illustrée sur la figure 5A.

L'ensemble de l'outil peut alors être ramené en surface afin d'être contrôlé et réarmé.

Comme l'illustrent les figures 7A et 7B, l'outil de coupe selon l'invention est avantageusement fixé à l'extrémité inférieure du train de tiges par l'intermédiaire de moyens de déconnexion 32 qui permettent de désolidariser l'outil du train de tiges dans le cas où aucun des systèmes décrits précédemment ne permettrait de relâcher les moyens d'ancrage.

Ces moyens de déconnexion 32 comprennent un corps tubulaire femelle 110 dont l'extrémité inférieure comporte un filetage 110a prévu pour être vissé dans un taraudage 71b formé à l'extrémité supérieure du corps tubulaire intérieur 72 illustré sur les figures 6A et 6B. Le corps tubulaire femelle 110 est accouplé à un corps tubulaire mâle 112 comportant à son extrémité supérieure un taraudage 112a dans lequel est vissée l'extrémité inférieure de la tige élémentaire adjacente du train de tiges 28.

Dans sa partie supérieure de moindre épaisseur, le corps tubulaire femelle 110 comporte une denture intérieure 114. Par ailleurs, le corps tubulaire mâle 112 comporte une partie inférieure de plus petit diamètre qui est reçue de façon étanche dans la partie supérieure de moindre épaisseur du corps tubulaire 110 et se termine par des branches souples et élastiques 116 dont les extrémités inférieures sont pourvues sur leur surface extérieure de dentures 118 complémentaires des dentures 114.

Lorsque l'extrémité inférieure de plus petit diamètre du corps tubulaire mâle 112 est emmanchée dans l'extrémité supérieure de moindre épaisseur du corps tubulaire femelle 110, les dentures 114 et 118 sont normalement maintenues en prise par un manchon coulissant 120 monté dans le corps tubulaire mâle 112. Plus précisément, le manchon 120 comporte dans une partie centrale ajourée une nervure périphérique 122 normalement logée dans une gorge annulaire 124 formée à l'intérieur du corps tubulaire 112. Dans ces conditions, l'extrémité inférieure rigide de la bague de verrouillage 120 maintient les extrémités inférieures des branches souples 116 comportant les dentures 118 en prise contre les dentures 114.

Lorsqu'on désire déconnecter le corps tubulaire mâle 112 du corps tubulaire femelle 110, on descend à l'aide d'un câble un outil coulissant 126 illustré en traits discontinus sur la figure 7A. Cet outil 126, vient en appui contre un épaulement 125 formé dans la partie inférieure du manchon coulissant 120 et permet, par battage, de faire sortir la nervure circonférentielle 122 de la gorge annulaire 124 en déformant la partie centrale ajourée du manchon 120. Cette dernière descend alors à l'intérieur du corps tubulaire mâle 112, comme l'illustre la figure 78, de sorte que les extrémités inférieures des branches souples 116 sur lesquelles sont formées les dents 118 se trouvent en face d'une partie de plus petit diamètre du manchon 120 et peuvent donc se dégager des dentures 114 formées à l'intérieur de la pièce tubulaire femelle 110. La déconnexion est alors obtenue et le train de tiges portant le corps tubulaire 112 peut être remonté, alors que le corps tubulaire 110 lié à l'outil de coupe reste au fond du puits.

Il est à noter que les moyens de déconnexion qui viennent d'être décrits permettent, le cas échéant, de reconnecter le train de tiges à l'outil de coupe si la déconnexion est faite avant que la coupe ne soit réalisée. Au contraire, si la déconnexion intervient après la découpe d'un tronçon par l'outil, l'ensemble de l'outil de coupe est automatiquement largué dans la cavité et perdu.

Bien entendu, l'invention n'est pas limitée au mode de réalisation qui vient d'être décrit à titre d'exemple, mais en couvre toutes les variantes.

Ainsi, le module de déconnexion 32 peut dans certains cas être supprimé et la commande des pièces d'ancrage et des couteaux peut être différente de celle qui a été décrite.

## Revendications

1. Procédé d'élimination d'un tubage (18) disposé coaxialement à l'intérieur d'un cuvelage (14) dans un puits d'accès (10) à une cavité saline (21) de stockage de gaz, caractérisé par le fait qu'il consiste à couper le tubage (18) par tronçons (18a), en partant du bas, en exécutant les opérations suivantes :
a) descente d'un outil de coupe (30) dans le tubage ;
b) ancrage de cet outil dans le tubage en dessous d'un niveau de coupe choisi ;
c) coupe mécanique du tubage au moyen de l'outil de coupe, pour découper un tronçon inférieur dans le tubage ;
d) descente de l'outil portant ledit tronçon inférieur jusqu'en dessous de l'extrémité inférieur du cuvelage ;
e) largage du tronçon inférieur par l'outil de coupe ;
f) remontée de l'outil de coupe dans le tubage jusqu'à un niveau de coupe supérieur au précédent ;
g) répétition des opérations b) à f) jusqu'à la découpe complète du tubage.

2. Dispositif d'élimination d'un tubage (18) disposé coaxialement à l'intérieur d'un cuvelage (14) dans un puits (10) d'accès à une cavité saline (21) de stockage de gaz, caractérisé par le fait qu'il comprend un outil de coupe (30) apte à être descendu dans le tubage à l'extrémité d'un train de tiges tubulaires (28), cet outil de coupe comprenant :
- des moyens d'ancrage (36) d'une partie inférieure (34), non rotative de l'outil dans le tubage, actionnés par des variations de pression à l'intérieur du train de tiges, à l'encontre d'une force exercée par des moyens de rappel (52); et
- des moyens de coupe (40) comprenant au moins un couteau (90) monté sur une partie supérieure rotative (38) de l'outil, un écartement du couteau étant assuré par un déplacement vers le bas de ladite partie supérieure, par rapport à la partie inférieure.

3. Dispositif selon la revendication 2, caractérisé par le fait que les moyens d'ancrage comprennent un piston (44) mobile selon un axe de l'outil dans ladite partie inférieure, une face supérieure du piston étant soumise à la pression régnant à l'intérieur du train de tiges et une face inférieure du piston étant soumise à l'action desdits moyens de rappel (52), le piston étant solidaire d'au moins une pièce annulaire (56) coopérant avec au moins une pièce d'ancrage (60) pour déplacer cette dernière radialement vers l'extérieur, à l'encontre de moyens élastiques (64 ), lorsque le piston se déplace vers le haut.

4. Dispositif selon la revendication 3, caractérisé par le fait que les moyens de rappel comprennent une chambre fermée (52) formée dans ladite partie inférieure et remplie de gaz sous pression.

5. Dispositif selon la revendication 4, caractérisé par le fait que l'outil de coupe comprend une tige coulissante (102) montée dans le piston, de façon à pouvoir occuper une position haute, dans laquelle cette tige obture un passage (45) formé dans le piston et apte à mettre en communication les faces inférieure et supérieure de ce dernier, et une position basse dans laquelle ledit passage est ouvert, le tiroir coulissant étant normalement maintenu en position haute par un organe frangible (103).

6. Dispositif selon l'une quelconque des revendications 3 à 5, caractérisé par le fait que le piston (44) supporte un barillet rotatif (66) pourvu d'une rainure (68) dans laquelle pénètre au moins un pion (70) porté par ladite partie inférieure, ladite rainure étant telle qu'après une impulsion de pression à l'intérieur du train de tiges, la pièce d'ancrage (56) est maintenue en position écartée, jusqu'à ce qu'une nouvelle impulsion de pression soit envoyée dans le train de tiges.

7. Dispositif selon l'une quelconque des revendications 2 à 6, caractérisé par le fait que la partie supérieure rotative de l'outil est normalement en prise avec la partie inférieure non rotative par un filetage unidirectionnel (96,98) autorisant un déplacement vers le bas de ladite partie supérieure, sous l'effet d'une rotation de cette dernière, jusqu'à une position inférieure de découpe dans laquelle ledit filetage n'est plus en prise, et un déplacement vers le haut de ladite partie supérieure, par une simple translation de cette dernière.

8. Dispositif selon la revendication 7, caractérisé par le fait que le couteau (90) est en appui sur une rampe (88) formée sur une pièce (84) montée coulissante selon l'axe de l'outil et dont l'extrémité opposée prend un appui sur la pièce inférieure non rotative, par l'intermédiaire d'un moyen élastique (80) précontraint.

9. Dispositif selon l'une quelconque des revendications 2 à 8, caractérisé par le fait que l'outil de coupe (30) est suspendu au train de tiges tubulaires (28) par des moyens de déconnexion (32) manoeuvrables à distance.

10. Dispositif selon la revendication 9, caractérisé par le fait que les moyens de déconnexion (32) comprennent un corps tubulaire mâle (112) fixe à l'extrémité inférieure du train de tiges tubulaires, et comportant des branches souples (116) munies extérieurement d'empreintes (118) complémentaires d'empreintes (114) formées dans une pièce tubulaire femelle (100) fixée à l'extrémité supérieure de l'outil de coupe, un manchon coulissant (120) normalement immobilisé en position haute dans la pièce tubulaire mâle par des moyens de blocage (122,124) maintenant alors les empreintes formées sur les branches souples en prise avec les empreintes formées dans la pièce tubulaire femelle, un déverrouillage des moyens de blocage commandé par l'application d'un effort vers le bas sur le manchon coulissant (120) amenant ce dernier dans une position basse dans laquelle les branches souples (116) peuvent se déformer radialement vers l'intérieur pour dégager les empreintes formées sur ces branches des empreintes formées sur la pièce tubulaire femelle.

## Patentansprüche

1. Verfahren zum Entfernen eines Rohres (18), das koaxial im Innern einer Auskleidung (14) in einem Zugangsbohrloch (10) zu einer Gasspeichersalzkaverne (21) angeordnet ist, dadurch gekennzeichnet, daß es darin besteht, das Rohr (18) in Abschnitte (18a) zu zerschneiden, indem man von unten beginnt, unter Ausführung der folgenden Arbeitsgänge:
a) Herablassen eines Trennwerkzeugs (30) in dem Rohr;
b) Verankern dieses Werkzeugs in dem Rohr unterhalb eines gewählten Trenniveaus;
c) mechanisches Zertrennen des Rohres mittels des Trennwerkzeuges zum Ablängen eines unteren Abschnitts in dem Rohr;
d) Herablassen des Werkzeugs, das diesen unteren Abschnitt trägt, bis unter das untere Ende der Auskleidung;
e) Lösen des unteren Abschnitts von dem Trennwerkzeug;
f) Wiederhochziehen des Trennwerkzeugs in dem Rohr bis zu einem oberhalb des vorhergehenden liegenden Trenniveau;
g) Wiederholen der Arbeitsgänge b) bis f) bis zum vollständigen Zerlegen des Rohres.

2. Vorrichtung zum Entfernen eines Rohres (18), das koaxial im Innern einer Auskleidung (14) in einem Zugangsbohrloch (10) zu einer Gasspeichersalzkaverne (21) angeordnet ist, dadurch gekennzeichnet, daß sie ein Trennwerkzeug (30) umfaßt, das in das Rohr am Ende eines Zuges von rohrförmigen Stangen (28) herablaßbar ist, welches Trennwerkzeug umfaßt:
- Mittel zum Verankern (36) einer nicht umlaufenden unteren Partie (34) des Werkzeugs in dem Rohr, betätigt durch Veränderungen des Drucks im Innern des Stangenzuges entgegen einer Kraft, die von Rückstellmitteln (52) ausgeübt wird; und
- Trennmittel (40), umfassend mindestens ein Messer (90), das auf einer oberen umlaufenden Partie (38) des Werkzeugs angeordnet ist, wobei ein Auslenken des Messers sichergestellt wird durch eine Verlagerung nach unten der genannten oberen Partie, relativ zur unteren Partie.

3. Vorrichtung nach Anspruch 2, dadurch gekennzeichnet, daß die Verankerungsmittel einen Kolben (44) umfassen, der beweglich längs einer Achse des Werkzeugs in der unteren Partie ist, wobei eine Oberseite des Kolbens dem Druck ausgesetzt ist, der im Inneren des Stangenzuges herrscht, und eine Unterseite des Kolbens der Wirkung der Rückstellmittel (52) unterworfen ist, wobei der Kolben verbunden ist mit mindestens einem Ringteil (56), das mit mindestens einem Verankerungsteil (60) zusammenwirkt zum Verlagern des letzteren radial nach außen, entgegen elastischen Mitteln (64), wenn der Kolben sich nach oben bewegt.

4. Vorrichtung nach Anspruch 3, dadurch gekennzeichnet, daß die Rückstellmittel eine geschlossene Kammer (52) umfassen, ausgebildet in der unteren Partie, und mit einem Gasunterdruck gefüllt.

5. Vorrichtung nach Anspruch 4, dadurch gekennzeichnet, daß das Trennwerkzeug eine Gleitstange (102) umfaßt, die in dem Kolben montiert ist derart, daß sie eine obere Position einnehmen kann, in der diese Stange eine in dem Kolben ausgebildete Passage (45) sperrt, und ausgebildet zum Inkommunikationbringen der Unterseite und der Oberseite dieses letzteren, und eine untere Position einnehmen kann, in der die Passage offen ist, wobei der Gleitschieber normalerweise in der oberen Position durch ein brechbares Organ (103) gehalten wird.

6. Vorrichtung nach einem der Ansprüche 3 bis 5, dadurch gekennzeichnet, daß der Kolben (44) eine drehbare Trommel (66) abstützt, die mit einer Nut (68) versehen ist, in die mindestens ein Stift (70) ragt, welcher von der unteren Partie getragen ist, welche Nut derart ausgebildet ist, daß nach einem Druckimpuls im Inneren des Stangenzuges das Verankerungsteil (56) in ausgefahrener Position gehalten wird, bis ein neuer Druckimpuls in den Stangenzug eingespeist wird.

7. Vorrichtung nach einem der Ansprüche 2 bis 6, dadurch gekennzeichnet, daß die obere drehbare Partie des Werkzeugs normalerweise im Eingriff steht mit der unteren, nicht drehbaren Partie über ein Einrichtungsgewinde (96, 98), das eine Verlagerung nach unten der oberen Partie unter der Wirkung einer Drehung dieser letzteren ermöglicht, bis zu einer unteren Trennposition, in der das Gewinde nicht mehr im Eingriff ist, sowie eine Verlagerung nach oben der oberen Partie durch eine einfache Translation dieser letzteren.

8. Vorrichtung nach Anspruch 7, dadurch gekennzeichnet, daß das Messer (90) in Anlage an einer Rampe (88) ist, gebildet auf einem Bauteil (84), das gleitbeweglich längs der Werkzeugachse montiert ist, und dessen entgegengesetztes Ende sich auf dem unteren, nicht drehbaren Teil abstützt über ein elastisches vorgespanntes Mittel (80).

9. Vorrichtung nach einem der Ansprüche 2 bis 8, dadurch gekennzeichnet, daß das Trennwerkzeug (30) an dem rohrförmigen Stangenzug (28) mittels fernsteuerbarer Lösemittel (32) aufgehangen ist.

10. Vorrichtung nach Anspruch 9, dadurch gekennzeichnet, daß die Lösemittel (32) einen rohrförmigen Steckkorpus (112) umfassen, befestigt am unteren Ende des rohrförmigen Stangenzuges, und weiche Arme (116) umfassen, die außen mit Formteilen (118) versehen sind, komplementär zu Formteilen (114), ausgebildet in einem rohrförmigen Einsteckteil (110), das am oberen Ende des Trennwerkzeugs befestigt ist, wobei eine Gleithülse (120) normalerweise in oberer Position in dem rohrförmigen Steckteil immobilisiert ist durch Blockiermittel (122, 124), wodurch die Formteile auf den weichen Armen im Eingriff mit den Formteilen gehalten werden, die in dem rohrförmigen Einsteckteil ausgebildet sind, wobei eine Entriegelung der Blockiermittel, gesteuert durch das Einwirken einer Kraft nach unten auf die Gleithülse (120), diese letztere in eine untere Position versetzt, in der die weichen Arme (116) sich radial nach innen deformieren können zum Freigeben der Formteile, die auf diesen Armen ausgebildet sind, von den Formteilen auf dem rohrförmigen Einsteckteil.

## Claims

1. A method of removing a tubing (18) disposed coaxially inside a casing (14) in an access well (10) to a salt cavity (21) for storing gas, the method being characterized by the fact that it comprises the step of cutting the tubing (18) into lengths (18a) from the bottom up by performing the following operations:
a) lowering a cutting tool (30) down the tubing;
b) anchoring said tool inside the tubing below a selected cutting level;
c) cutting the tubing mechanically by means of the cutting tool, thereby cutting off a bottom length from the tubing;
d) lowering the tool holding said bottom length to below the bottom end of the casing;
e) dropping the bottom length from the cutting tool;
f) raising the cutting tool into the tubing up to a cutting level higher than the previous cutting level; and
g) repeating operations b) to f) until the tubing has been cut up completely.

2. Apparatus for removing a tubing (18) disposed coaxially inside a casing (14) inside an access well (10) to a salt cavity (21) for storing gas, the apparatus being characterized by the fact that it comprises a cutting tool (30) suitable for being lowered down the tubing at the end of a string of tubular rods (28), said cutting tubing comprising:
- anchor means (36) for anchoring a non-rotary bottom portion (38) of the tool inside the tubing, the anchor means being actuated by varying the pressure inside the string of rods against a force exerted by return means (52); and
- cutting means (40) including at least one knife (90) mounted on a rotary top portion (38) of the tool, with the knife being extended by displacing said top portion downwards relative to the bottom portion.

3. Apparatus according to claim 2, characterized by the fact that the anchor means comprise a piston (44) movable along an axis of the tool inside said bottom portion, a top face of the piston being subjected to the pressure existing inside the string of rods, and a bottom face of the piston being subjected to the action of said return means (52), the piston being fixed to at least one annular part (56) co-operating with at least one anchor piece (60) to displace said anchor piece radially outwards against resilient means (64) when the piston moves upwards.

4. Apparatus according to claim 3, characterized by the fact that the return means comprise a closed chamber (52) formed inside said bottom portion and filled with gas under pressure.

5. Apparatus according to claim 4, characterized by the fact that the cutting tool includes a sliding rod (102) mounted inside the piston so as to be capable of taking up a high position in which said rod closes a passage (45) formed through the piston and suitable for putting the top and bottom faces of the piston into communication with each other, and a low position in which said passage is open, the sliding rod being normally held in its high position by a frangible member (103).

6. Apparatus according to any one of claims 3 to 5, characterized by the fact that the piston (44) supports a rotary drum (66) provided with a groove (68) into which at least one peg (70) carried by said bottom portion penetrates, said groove being such that after a pressure pulse inside the string of rods, the anchor piece (56) is held in its extended position until a further pressure pulse is applied to the string of rods.

7. Apparatus according to any one of claims 2 to 6, characterized by the fact that the rotary top portion of the tool is normally engaged with the non-rotary bottom portion by means of a one-way screw thread (96, 98) enabling said top portion to move downwards when rotated until it reaches a cutting bottom position in which said screw thread no longer meshes, with upwards displacement of said top portion being obtained merely by moving it in translation.

8. Apparatus according to claim 7, characterized by the fact that the knife (90) bears against a ramp (88) formed on a part (84) mounted to slide parallel to the axis of the tool, with its opposite end bearing against the non-rotary bottom portion via prestressed resilient means (80).

9. Apparatus according to any one of claims 2 to 8, characterized by the fact that the cutting tool (30) is suspended from the string of tubular rods (28) by remotely operable disconnection means (32).

10. Apparatus according to claim 9, characterized by the fact that the disconnection means (32) comprise a male tubular body (112) fixed to the bottom end of the string of tubular rods, and including flexible branches (106) provided externally with indentations (118) complementary to indentations (114) formed in a female tubular body (110) fixed to the top end of the cutting tool, a sliding sleeve (120) normally held in a high position inside the male tubular body by locking means (122, 124) then holding the indentations formed on the flexible branches in engagement with the indentations formed in the female tubular body, the locking means being unlocked by applying a downwards force on the sliding sleeve (120) to move it to a low position in which the flexible branches (116) are free to deform radially inwardly, thereby disengaging the indentations formed on said branches from the indentations formed on the female tubular body.
